# EUROPÄISCHE PATENTSCHRIFT

(11) **EP 0 984 973 B1**
(45) Veröffentlichungstag und Bekanntmachung des Hinweises auf die Patenterteilung: **23.07.2003**
(21) Anmeldenummer: 98929285.9
(22) Anmeldetag: 06.05.1998
(51) Int. Cl.: C07F 17/00, C08F 10/00

(54) **STEREORIGIDE METALLOCENVERBINDUNG**
STEREORIGID METALLOCENE COMPOUNDS
COMPOSES METALLOCENES STEREORIGIDES

(30) Priorität: 06.05.1997 DE 19719103
(43) Veröffentlichungstag der Anmeldung: 15.03.2000
(73) Patentinhaber: Basell Polyolefine GmbH, 67056 Ludwigshafen (DE)
(72) Erfinder: KAMINSKY, Walter, D-25421 Pinneberg (DE); KUEBER, Frank, D-61440 Oberursel (DE); SCHIEMENZ, Berthold, D-65929 Frankfurt (DE); WERNER, Ralf, D-22765 Hamburg (DE); SCHAUWIENOLD, Anne-Meike, D-21073 Hamburg (DE); FREIDANCK, Frank, D-22305 Hamburg (DE)
(86) Internationale Anmeldenummer: EP9802671
(87) Internationale Veröffentlichungsnummer: WO98050395

(56) Entgegenhaltungen:
- EP-A- 0 503 422
- EP-A- 0 786 466
- ALT, H.G. ET AL.: "syndiospezifische polymerisation von propylen: 3-, 4-, 3,4- und 4,5-substituierte Zirconocenkomplexe des Typs (C13H8-nRnCR'2C5H4)ZrCl2 (n=1,2; R= Alkyl, Aryl; R' = Me, Ph)" JOURNAL OF ORGANOMETALLIC CHEMISTRY, Bd. 514, 1996, Seiten 257-270, XP002030729

## Beschreibung

Die vorliegende Erfindung betrifft spezielle stereorigide Metallocenverbindungen sowie ein Verfahren zur Herstellung von Polyolefinen in Gegenwart dieser speziellen stereorigiden Metallocenverbindungen.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP 129 368, EP 351 392).

Im Tagungsband der 1st Journal of Organometallic Chemistry Conference on Applied Organometallic Chemistry, Seite 136 werden Metallocene beschrieben, welche einen substituierten tricyclischen Kohlenwasserstoff als Ligandsystem aufweisen.

In EP-A-0 503 422 werden substituierte verbrückte Metallocenverbindungen beschrieben, die zur Herstellung chemisch einheitlicher Cycloolefincopolymere verwendet werden.

In EP-A-0 786 466 werden diarylmethylen-verbrückten Metallocenverbindungen beschrieben.

Bei Einsatz löslicher Metallocenverbindungen auf der Basis von Bis(cyclopentadienyl)zirkon-dialkyl bzw. -dihalogenid in Kombination mit oligomeren Aluminoxanen erhält man ataktische Polymere, die wegen ihrer unausgewogenen und ungenügenden Produkteigen schaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen , Ethylen oder eine Dimethylsilylenbrücke miteinander verbunden sind, können aufgrund ihrer konformativen Starrheit als Katalysatoren zur isospezifischen Polymerisation von Olefinen benutzt werden (Chem. Lett. 1989, S. 1853 bis 1856 oder EP A 0 316 155). Besondere Bedeutung besitzen Metallocene mit (substituierten) Indenylresten als Liganden zur Herstellung hochisotaktischer Polymere mit hoher Kristallinität und hohem Schmelzpunkt (EP 485 823, EP 530 647).

Von großem Interesse sind auch Polyolefine, die in ihrem Eigenschaftsprofil zwischen diesen beiden Extremen liegen.

Es bestand die Aufgabe, eine Metallocenverbindung zur Verfügung zu stellen, welche die Nachteile des Standes der Technik vermeidet und sich zur Herstellung von Polyolefinen eignet.

Die vorliegende Erfindung betrifft somit eine stereorigide Metallocenverbindung der Formel I 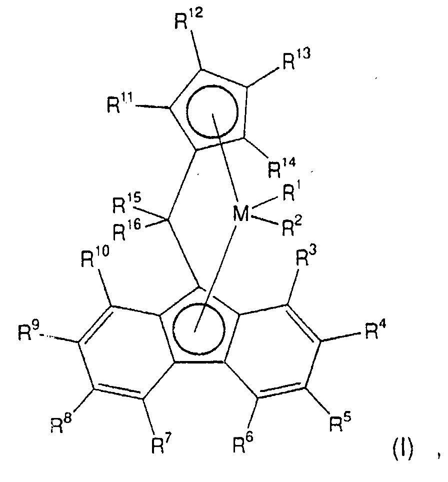 worin:
M ein Metall der Gruppe IIIb, IVb, Vb oder VIb des Periodensystems der Elemente ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy-, eine C₆-C₁₀-Aryl-, eine C₆-C₂₅-Aryloxy-, eine C₂-C₁₀-Alkenyl-, eine C₇-C₄₀-Arylalkyl- oder eine C₇-C₄₀-Arylalkenylgruppe, eine OH-Gruppe, ein Halogenatom oder NR¹⁵₂, worin R¹⁵ ein Halogenatom, eine C₁-C₁₀-Alkylgruppe oder eine C₆-C₁₀-Arylgruppe ist, bedeuten, oder R¹ und R² zusammen mit den sie verbindenden Atomen ein Ringsystem bilden,
R³, R⁴, R⁵, R⁶, R⁷, R⁸, R⁹, R¹⁰, R¹¹, R¹⁴, R¹⁵ und R¹⁶ gleich oder verschieden sind und ein Wasserstoffatom, eine C₁ C₄₀-kohlenstoffhaltige Gruppe wie eine C₁ C₁₀-Alkylgruppe, die halogeniert sein kann, eine C₆ C₃₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl-, oder eine C₈-C₄₀-Arylalkenylgruppe, ein Halogen atom, einen SiR¹⁷₃-, NR¹⁷₂-, SiOR¹⁷₃-, SiSR¹⁷₃- oder PR¹⁷₂-Rest bedeuten, worin R¹⁷ gleich oder verschieden ein Halogenatom, eine C₁-C₁₀-Alkylgruppe oder eine C₆-C₁₀-Arylgruppe sind oder ein Ringsystem bilden, oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenden Atomen ein Ringsystem bilden, welches bevorzugt 4 bis 40, besonders bevorzugt 6 bis 20 Kohlenstoffatome enthält,
und R¹² und R¹³ gleich oder verschieden sind und ein Wasserstoffatom, eine C₆-C₃₀-arylhaltige Gruppe, wie eine C₆-C₃₀-Arylgruppe, eine C₆-C₂₀-Aryloxy-, eine C₇-C₄₀-Arylalkyl-, oder eine C₈-C₄₀-Arylalkenylgruppe sind, die jeweils halogeniert sein können und mindestens einer der Reste R¹² und R¹³ von einem Wasserstoffatom verschieden ist.

Für Verbindungen der Formel I gilt bevorzugt, daß:
M ein Metall der Gruppe IVb des Periodensystems der Elemente wie Titan, Zirkonium oder Hafnium, insbesondere Zirkonium ist,
R¹ und R² gleich sind und eine C₁-C₄-Alkylgruppe oder ein Halogenatom wie Fluor, Chlor, Brom oder Jod, insbesondere Chlor bedeuten,
R³, R⁴, R⁵, R⁶, R⁷, R⁸, R⁹, R¹⁰, R¹¹, R¹⁴, R¹⁵ und R¹⁶ gleich oder verschieden sind und ein Wasserstorfatom, eine C₁-C₁₀-Alkylgruppe oder eine C₆-C₂₄-Arylgruppe oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenden Atomen ein aromatisches oder aliphatisches Ringsystem mit 4 bis 20 Kohlenstoffatome bilden,
und R¹² und R¹³ gleich oder verschieden sind und ein Wasserstoffatom oder eine C₆-C₂₄-Arylgruppe sind und mindestens einer der Reste R¹² und R¹³ von einem Wasserstoffatom verschieden ist.

Besonders bevorzugt sind Verbindungen der Formel I, worin:
M Zirkonium ist,
R¹ und R² gleich sind und ein Halogenatom, insbesondere Chlor bedeuten,
R³, R⁴, R⁵, R⁶, R⁷, R⁸, R⁹, R¹⁰, R¹¹, R¹⁴, R¹⁵ und R¹⁶ gleich oder verschieden sind und ein Wasserstoffatom, eine C₁-C₄-Alkylgruppe wie Methyl, Ethyl, Propyl, Isopropyl, Butyl tert.-Butyl oder Isobutyl oder eine C₆-C₁₄-Arylgruppe wie Phenyl oder Naphtyl bedeuten oder R¹¹ und R¹⁵ ein Ringsystem bilden, und R¹² ein Wasserstoffatom und R¹³ eine C₆-C₁₄-Arylgruppe ist.

Beispiele für erfindungsgemäße Metallocenverbindungen sind:
[4-(h⁵-Fluorenyl)-4,6,6-trimethyl-(2-phenyl-h⁵-tetrahydropentalen]dichlorozirconium
[Isopropyliden-(2-phenyl-η⁵-cyclopentadienyl)-(9-fluorenyl)]dichlorozirconium
[4-(h⁵-Fluorenyl)-4,6,6-trimethyl-(2-phenyl-h⁵-tetrahydropentalen]dichlorotitan
[Isopropyliden-(2-phenyl-η⁵-cyclopentadienyl)-(9-fluorenyl)]dichlorotitan
[4-(h⁵-Fluorenyl)-4,6,6-trimethyl-(2-phenyl-h⁵-tetrahydropentalen] dichlorohafnium
[Isopropyliden- (2-phenyl-η⁵-cyclopentadienyl)-(9-fluorenyl)]dichlorohafnium
[4-(h⁵-Fluorenyl)-4,6,6-trimethyl-(2-phenyl-h⁵-tetrahydropentalen]bis-dimethylamino-zirconium
[Isopropyliden-(2-phenyl-η⁵-cyclopentadienyl)-(9-fluorenyl)]bisdimethylamino-zirconium
[4-(h⁵-Fluorenyl)-4,6,6-trimethyl- (2-(p-tolyl)-h⁵-tetrahydropentalen]dichlorozirconium
[Isopropyliden-(2- (p-tolyl)-η⁵-cyclopentadienyl)-(9-fluorenyl)]dichlorozirconium
[4-(h⁵-Fluorenyl)-4,6,6-trimethyl-(2-(m-tolyl)-h⁵-tetrahydropentalen]dichlorozirconium
[Isopropyliden-(2-(m-tolyl)-η⁵-cyclopentadienyl)-(9-fluorenyl)]dichlorozirconium
[4-(h⁵-Fluorenyl)-4,6,6-trimethyl-(2-(o-tolyl)-h⁵-tetrahydropentalen]dichlorozirconium
[Isopropyliden-(2-(o-tolyl)-η⁵-cyclopentadienyl)-(9-fluorenyl)]dichlorozirconium
[4-(h⁵-Fluorenyl)-4,6,6-trimethy-(2-(2,3-dimethylphenyl)-h⁵-tetrahydropentalen]dichlorozirconium
[Isopropyliden-(2-(2,3-dimethylphenyl)-η⁵-cyclopentadienyl)-(9-fluorenyl)]dichlorozirconium
[4-(h⁵-Fluorenyl)-4,6,6-trimethy-(2-(2,4-dimethylphenyl)-h⁵-tetrahydropentalen]dichlorozirconium
[Isopropyliden-(2-(2,4-dimethylphenyl)-η⁵-cyclopentadienyl)-(9-fluorenyl)]dichlorozirconium
[4-(h⁵-Fluorenyl)-4,6,6-trimethyl-(2-(2,6-dimethylphenyl)-h⁵-tetrahydropentalen]dichlorozirconium
[Isopropyliden-(2-(2,6-dimethylphenyl)-η⁵-cyclopentadienyl)-(9-fluorenyl)]dichlorozirconium
[4-(h⁵-Fluorenyl)-4,6,6-trimethyl-(2-(3,5-dimethylphenyl)-h5-tetrahydropentalen]dichlorozirconium
[Isopropyliden- (2- (3,5-dimethylphenyl)-η⁵-cyclopentadienyl)-(9-fluorenyl)]dichlorozirconium
[4-(h⁵-Fluorenyl)-4,6,6-trimethyl-(2-tetramethylphenyl-h⁵-tetrahydropentalen]dichlorozirconium
[Isopropyliden-(2-tetramethylphenyl -η⁵-cyclopentadienyl)-(9-fluorenyl)]dichlorozirconium
[4-(h⁵-Fluorenyl)-4,6,6-trimethyl-(2-tetramethylphenyl-h⁵-tetrahydropentalen]dichlorozirconium
[Isopropyliden-(2-tetramethylphenyl -η⁵-cyclopentadienyl)-(9-fluorenyl)]dichlorozirconium
[4-(h⁵-Fluorenyl)-4,6,6-trimethyl-(2-(2,4-dimethoxyphenyl)-h⁵-tetrahydropentalen]dichlorozirconium
[Isopropyliden-(2-(2,4-dimethoxyphenyl)-η⁵-cyclopentadienyl)-(9-fluorenyl)]dichlorozirconium
[4-(h⁵-Fluorenyl)-4,6,6-trimethyl-(2-(3,5-dimethoxyphenyl)-h⁵-tetrahydropentalen]dichlorozirconium
[Isopropyliden-(2-(3,5-dimethoxyphenyl)-η⁵-cyclopentadienyl)-(9-fluorenyl)]dichlorozirconium, [Isopropyliden-(2-(2,3-dimethoxyphenyl)-η⁵-cyclopentadienyl-(9-fluorenyl)]dichlorozirconium, [Isopropyliden-(2-(2,6-dimethoxyphenyl)-η⁵-cyclopentadienyl)-(9-fluorenyl)]dichlorozirconium
[4-(h⁵-Fluorenyl)-4,6,6-trimethyl-(2-(chlor-phenyl)-h⁵-tetrahydropentalen]dichlorozirconium
[Isopropyliden-(2- (chlor-phenyl) -η⁵-cyclopentadienyl)-(9-fluorenyl)]dichlorozirconium
[4-(h⁵-Fluorenyl)-4,6,6-trimethyl-(2-(dichlor-phenyl)-h⁵-tetrahydropentalen]dichlorozirconium
[Isopropyliden-(2-(dichlor-phenyl)-η⁵-cyclopentadienyl) (9-fluorenyl)]dichlorozirconium
[4-(h⁵-Fluorenyl)-4,6,6-trimethyl-(2-(trichlor-phenyl)-h⁵-tetrahydropentalen]dichlorozirconium
[Isopropyliden-(2-(trichlor-phenyl)-η⁵-cyclopentadienyl -(9-fluorenyl)]dichlorozirconium
[4-(h⁵-Fluorenyl)-4,6,6-trimethyl-(2-(fluor-phenyl)-h⁵-tetrahydropentalen]dichlorozirconium
[Isopropyliden-(2-(fluor-phenyl)-η⁵-cyclopentadienyl)-(9-fluorenyl)]dichlorozirconium
[4-(h⁵-Fluorenyl)-4,6,6-trimethyl-(2-(difluor-phenyl)-h⁵-tetrahydropentalen]dichlorozirconium
[Isopropyliden-(2-(difluor-phenyl)-η⁵-cyclopentadienyl) (9-fluorenyl)]dichlorozirconium
[4-(h⁵-Fluorenyl)-4,6,6-trimethyl-(2-(pentafluor-pheny] -h⁵-tetrahydropentalen]dichlorozirconium
[Isopropyliden-(2-(pentafluor-phenyl)-η⁵-cyclopentadienyl)-(9-fluorenyl)]dichlorozirconium
[4-(h⁵-Fluorenyl)-4,6,6-trimethyl-(2-(3,5-trifluormethylphenyl)-h⁵-tetrahydropentalen]dichlorozirconium
[Isopropyliden-(2-(3,5-trifluormethyl-phenyl)-η⁵-cyclopentadienyl)-(9-fluorenyl)]dichlorozirconium
[4-(h⁵-Fluorenyl)-4,6,6-trimethyl-(2-(tert-butyl-phenyl,-h⁵-tetrahydropentalen]dichlorozirconium
[Isopropyliden-(2-(tert-butyl-phenyl)-η⁵-cyclopentadienyl)-(9-fluorenyl)]dichlorozirconium
[4-(h⁵-Fluorenyl)-4,6,6-trimethyl-(2-(3,5-di-tert-butylphenyl)-h⁵-tetrahydropentalen]dichlorozirconium
[4-(h⁵-Fluorenyl)-4,6,6-trimethyl-(2-(biphenyl)-h⁵-tetrahydropentalen]dichlorozirconium
[Isopropyliden-(2-(biphenyl)-η⁵-cyclopentadienyl)-(9-fluorenyl)]dichlorozirconium
[4-(h⁵-Fluorenyl)-4,6,6-trimethyl-(2-(biphenyl)-h⁵-tetrahydropentalen]dichlorozirconium
[Isopropyliden-(2- (biphenyl)-η⁵-cyclopentadienyl)-(9-fluorenyl)]dichlorozirconium
[4-(h⁵-Fluorenyl)-4,6,6-trimethyl- (2-(3, 5-diphenyl-phenyl)-h⁵tetrahydropentalen]dichlorozirconium
[Isopropyliden- (2- (3,5-diphenyl-phenyl) -η⁵-cyclopentadienyl)-(9-fluorenyl)]dichlorozirconium
[4-(h⁵-Fluorenyl)-4,6,6-trimethyl-2-naphthyl-h⁵-tetrahydropentalen]dichlorozirconium
[Isopropyliden-(2-naphthyl-η⁵-cyclopentadienyl)-(9-fluorenyl)]dichlorozirconium

Die Benennung der voranstehend genannten erfindungsgemäßen Verbindungen soll anhand der Verbindung [4-(h⁵-Fluorenyl)-4,6,6-trimethyl-(h⁵-2-phenyl-tetrahydropentalen]dichlorozirconium veranschaulicht werden.

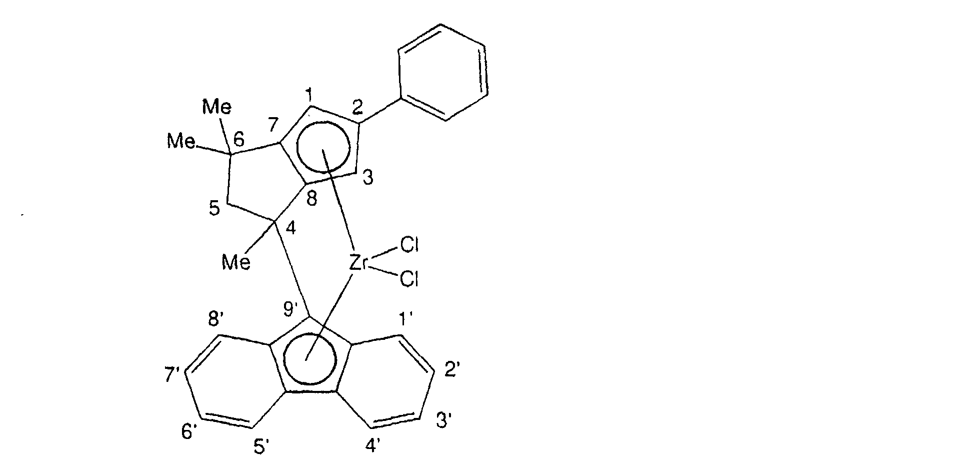

Die erfindungsgemäßen Metallocene sind hochaktive Katalysatorkomponenten für die Olefinpolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)-oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Die vorliegende Erfindung betrifft außerdem ein Verfahren zur Herstellung eines Polyolefins durch Polymerisation mindestens eines Olefins in Gegenwart eines Katalysators der mindestens einen Cokatalysator und mindestens eine stereorigide Metallocenverbindung der Formel I enthält. Unter dem Begriff Polymerisation wird eine Homopolymerisation wie auch eine Copolymerisation verstanden.

Bevorzugt werden in dem erfindungsgemäßen Verfahren eines oder mehrere Olefine der Formel R^{a}-CH=CH-R^{b} polymerisiert, worin R^{a} und R^{b} gleich oder verschieden sind und ein Wasserstoffatom oder einen Kohlenwasserstoffrest mit 1 bis 20 C Atomen, insbesondere 1 bis 10 C-Atomen, bedeuten, und R^{a} und R^{b} zusammen mit den sie verbindenden Atomen einen oder mehrere Ringe bilden können. Beispiele für solche Olefine sind 1-Olefine mit 2 bis 40, bevorzugt 2-10 C-Atomen, wie Ethylen, Propylen, 1-Buten, 1-Penten, 1-Hexen, 4-Methyl-1-penten oder 1-Octen, Styrol, Diene wie 1,3 Butadien, Isopren, 1,4-Hexadien oder cyclische Olefine.

Bevorzugt werden in dem erfindungsgemäßen Verfahren Ethylen oder Propylen homopolymerisiert, oder Ethylen mit einem oder mehreren cyclischer Olefinen, wie Norbornen, und/oder einem oder mehreren acyclischen 1-Olefinen mit 3 bis 20 C-Atomen, wie Propylen, und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/ 1,4-Hexadien-Copolymere.

Die Polymerisation wird bevorzugt bei einer Temperatur von 60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein oder mehrstufig durchgeführt werden. Eine bevorzugte Ausführungsform ist die Gasphasen- und Lösungspolymerisation.

Die Polymerisation kann in Lösung, in Masse, in Suspension oder in der Gasphase, kontinuierlich oder diskontinuierlich, ein oder mehrstufig durchgeführt werden. Eine bevorzugte Ausführungsform ist die Gasphasen- und Lösungspolymerisation.

Bevorzugt enthält der in dem erfindungsgemäßen Verfahren eingesetzte Katalysator eine Metallocenverbindung. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in-ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminium-verbindung und/oder eine Borverbindung verwendet.

Die Borverbindung hat bevorzugt die Formel R¹⁸ₓNH_{4 x}BR¹⁹₄, R¹⁸ₓPH₄ₓBR¹⁹₄, R¹⁸₃CBR¹⁹₄ oder Ba¹⁹₃, worin x eine Zahl von 1 bis 4, bevorzugt 3, bedeutet, die Reste R¹⁸ gleich oder verschieden, bevorzugt gleich sind, und C₁-C₁₀-Alkyl oder C₆-C₁₈-Alkyl sind, oder zwei Reste R¹⁸ zusammen mit dem sie verbindenden Atomen einen Ring bilden, und die Reste R¹⁹ gleich oder verschieden, bevorzugt gleich sind, und C₆-C₁₈-Aryl sind, das durch Alkyl, Haloalkyl oder Fluor substituiert sein kann. Insbesondere steht R¹⁸ für Ethyl, Propyl, Butyl oder Phenyl und R¹⁹ für Phenyl, Pentafluorphenyl, 3,5-Bistrifluormethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IIa für den linearen Typ und/oder der Formel IIb für den cyclischen Typ verwendet, 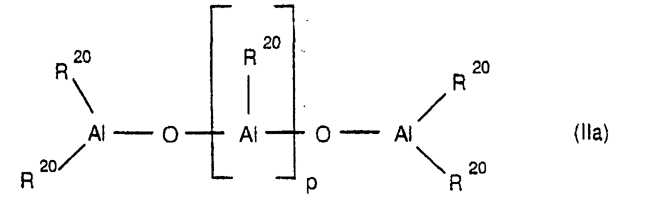 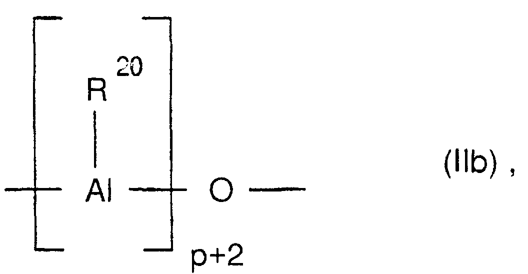 wobei in den Formeln IIa und IIb die Reste R²⁰ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R²⁰ gleich und bedeuten Wasserstoff, Methyl, Isobutyl, Phenyl oder Benzyl, besonders bevorzugt Methyl.

Sind die Reste R²⁰ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R²⁰) enthalten sind.

Verfahren zur Herstellung der Aluminoxane sind bekannt. Die genaue räumliche Struktur der Aluminoxane ist nicht bekannt (J. Am. Chem. Soc (1993) 115, 4971).

Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew. % bis zur Sättigungsgrenze, vorzugsweise von 5 bis 30 Gew. %, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von 78 bis 100°C, vorzugsweise 0 bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R²⁰ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium. vorteilhaft. Diese Reinigung kann sowohl im Polymerisationssystem selbst erfolgen, oder das Olefin wird vor der Zugabe in das Polymerisationssystem mic der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element Halogeniden in einer Knallgas Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche getaktet jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (=5,2 mol) Trimethylaluminium werden bei 25°C zugefügt. Danach werden 250 g Kieselgel SD 3216 30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekunden in den Reaktor gegeben. Der Druck, herrührend vom Argon und den entwickelten Gasen, wird durch ein Druckregelventil konstant bei 10 bar gehalten. Nachdem alles wasser eingebracht worden ist, wird das Umpumpsystem abgeschaltet und das Rühren noch 5 Stunden bei 25°C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew. % Aluminium, das Suspensionsmittel enthält 0,1 Gew.-% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis +120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.

Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend das erfindungsgemäße Metallocen und einen geträgerten Cokatalysator) kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die in der vorliegenden Erfindung beschriebenen speziellen stereorigiden Metallocenverbindungen eignen sich zur Herstellung von Polyolefinen, insbesondere solchen mit reduzierter Kristallinität, erhöhter Schlagzähigkeit, erhöhter Transparenz, hoher Fließfähigkeit bei Verarbeitungstemperatur sowie reduziertem Schmelzpunkt.

Anwendungsschwerpunkte solcher Polyolefine sind Weichmacher und Gleitmittelrezepturen, Schmelzkleberanwendungen, Beschichtungen, Abdichtungen, Isolierungen, Ausgießmassen oder Schalldämmungsmaterialien.

Durch Anwendung von Wasserstoff oder durch Erhöhung der Polymerisationstemperatur sind auch Polyolefine niedriger Molmasse, wie Wachse zugänglich, deren Härte oder Schmelzpunkt durch den Comonomergehalt variiert werden können.

Umgekehrt lassen sich durch Wahl der Polymerisationsbedingungen auch hochmolekulare Polyolefine herstellen, welche als thermoplastische Werkstoffe geeignet sind. Diese sind insbesondere zur Herstellung von Formkörpern wie Folien, Platten oder Großhohlkörpern (z.B. Rohre) geeignet.

Durch Wahl des Polymerisations-Verfahrens und der Comonomerart(en), sowie Comonomermenge(n) lassen sich Olefincopolymere mit elastomeren Eigenschaften wie z.B. Ethylen/Propylen/1,4 Hexadien-Terpolymere herstellen.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten α,β-ungesättigten Ketone und Fulvene erfolgte nach literaturbekannten Methoden (Synlett 771 (1991); J. Chem. Soc., Commun. 1694 (1986); Chem. Ber. 116, 119 (1983); Tetrahedron Lett. 23; 1447 (1982)), Cyclopentadien wurde durch Cracken des Dimeren gewonnen und bei (-)35°C gelagert.

Die hergestellten Verbindungen wurden mit ¹H-NMR analysiert.

### Beispiel 1

### Herstellung von Phenylcyclopentadien

Zu 2.3 mol Phenyllithium in 1000 ml Diethylether tropfen bei -5°C 100 ml (1.2 mol) 2-Cyclopenten-1-on in 400 ml Diethylether. Nach Hydrolyse und Extraktion der wässerigen Phase mit Diethylether werden die vereinigten organischen Phasen über Natriumsulfat getrocknet. Nach Abziehen des Lösungsmittels werden 205 g Rohprodukt erhalten. In einem 500 ml Dreihalskolben mit Destillationsaufsatz, Argoninlett und Gaseinleitungsrohr wird das Produkt für drei Stunden bei kräftigem Argonstrom auf eine Temperatur von 180°C erwärmt. Nach 18 g Wasser destillieren bei 160 - 180°C und 10⁻² mbar insgesamt 145,4 g Phenylcyclopentadien

### Beispiel 2

### Herstellung von 2-Phenyl-6,6-dimethylfulven

Zu 10.3 g (72 mmol) frisch destilliertem Phenylcyclopentadien in 150 ml Toluol tropfen bei -50°C in 40 Minuten 50 ml (80 mmol) einer 1,6 molaren Lösung n-Butyllithiums in Hexan. Beim Erwärmen auf Raumtemperatur bildet sich ein farbloser Niederschlag. Nach Filtrieren der Lösung wird der Niederschlag in 100 ml Toluol aufgenommen und bei Raumtemperatur mit 10 ml (136 mmol) Aceton in 50 ml Toluol versetzt. Es wird mit 10 %-iger (NH₄)₂CO₃-Lösung hydrolisiert. Nach Extrahieren der wässerigen Phase mit Diethylether werden die vereinigten organischen Phasen über Natriumsulfat getrocknet. Nach abdestillieren der Lösungsmittel werden 5.6 g (31 mmol, 43 % bezogen auf Phenylcyclopentadien) eines gelben, im Kühlschrank erstarrenden Öles, erhalten.

¹H-NMR (100 MHz, CDCl₃, TMS): 7.65-7.08 (5 H, m, arom. Protonen), 6.89-6.59 (3 H, m, olefin. Protonen), 2.15 (6 H, s, Methylprotonen), IR (KBr, n [cm⁻¹]): 2956, 2927, 2906, 1639, 1444, 1355, 759, 692.

Massenspektrum: m/z = 182 (Molpeak)

### Beispiel 3

### Herstellung von 2-(3-Phenylcyclopentadienyl)-2-fluorenylpropan

13.8 ml (22 mmol) n-Butyllithium, 1.6 molare Lösung in Hexan, tropfen bei -50°C zu 3.7 g (22 mmol) Fluoren in 70 ml THF. Nach vollständiger Zugabe wird kurz zum Sieden erwärmt, dann tropfen 4.0 g (22 mmol) 2-Phenyl-6,6-dimethylfulven in 15 ml THF bei -50°C zu. Nach 16 h wird die Mischung auf 50 ml 0,1 molare Salzsäure gegeben. Nach extrahieren der wäßrigen Phase mit Diethylether werden die vereinigten organischen Phasen nacheinander mit NaHCO₃und mit gesättigter NaCl-Lösung gewaschen und über Na₂SO₄ getrocknet. Nach dreimaligem Umkristallisieren aus Ethanol werden 2.7 g (7.8 mmol, 36 % bezogen auf Fluoren) farbloses Pulvers erhalten.

¹H-NMR (100 MHz, CDCl₃, TMS): 7.75-7.06 (13 H, m, arom. Protonen), 6.90-5.90 (2 H, m, olefin. Protonen), 4.21 (1 H, s, aliph. Fluoren-Proton), 3.59-3.38 (2 H, m, aliph. Cp-Protonen), 1.09 (6 H, s, Methylprotonen); IR (KBr, n [cm-1]): 3036, 2965, 2931, 2873, 1446, 745.

Massenspektrum: m/z = 348 (Molpeak)

### Beispiel 4

### Herstellung von [Isopropyliden-(3-phenylcyclopentadienyl)-9-fluorenyl] zirkoniumdichlorid

4.2 ml (6.7 mmol) n-Butyllithium, 1.6 molare Lösung in Hexan, tropfen bei Raumtemperatur zu 1.1 g (3.2 mmol) 2-(3-Phenylcyclopentadienyl)-2-fluorenylpropan in 30 ml THF. Die.Mischung wird nach 12 Stunden kurz zum Sieden erhitzt. Nach abdestillieren der Lösungsmittel wird der Niederschlag mit 20 ml Pentan gewaschen. Nach Dekantieren des Pentans werden 0.74 g (3.2 mmol) Zirkoniumtetrachlorid und 100 ml Pentan zugefügt. Die Mischung rührt drei Tage bei Raumtemperatur. Nach Dekantieren des Pentans wird der Rückstand mit Methylenchlorid extrahiert. Nach Einengen des Lösungsmittels werden 530 mg (1.0 mmol, 31 % bezogen auf Zirkoniumtetrachlorid) des Produktes als kristalliner, roter Feststoff erhalten.

¹H-NMR (100 MHz, CDCl₃, TMS) : 8.20-7.23 (13 H, m, arom. Protonen), 6.53, 5.91-5.87 (3 H, m, arom. Cp-Protonen), 2.44 (6 H, s, Methylprotonen)

### Beispiel 5

### Herstellung vonl-Fluorenyl-1,3,3-trimethyl-5-phenyl-1,2,3,6-tetrahydro-pentalen

Eine Mischung von 10.7 ml (0.15 mol) Aceton und 10.8 ml Pyrrolidin in 100 ml Methanol werden eineinhalb Stunden bei Raumtemperatur gerührt. Dazu werden 11.5 g (0.08 mol) frisch destillierten Phenylcyclopentadiens in 20 ml Diethylether gegeben und 40 Stunden gerührt. Alle flüchtigen Bestandteile werden im Ölpumpenvakuum abkondensiert. Zurück bleiben 8.0 g eines rotbraunen Öls. Zu 28 mmol Fluorenyllithiums in THF tropfen bei -50°C 7.0 g Rohfulven in 25 ml THF. Die Mischung rührt acht Stunden bei Raumtemperatur gerührt und wird dann kurz zum Sieden erhitzt. Dann wird auf 50 ml 0,1 molare Salzsäure gegeben. Nach extrahieren der wäßrigen Phase mit Diethylether werden die vereinigten organischen Phasen nacheinander mit NaHCO₃- und mit gesättigter NaCl-Lösung gewaschen und über Na₂SO₄ getrocknet. Durch zweimaligem Umkristallisieren aus Ethanol werden 2.1 g (5.4 mmol, 19 %, bezogen auf Fluoren) Produkt erhalten.

¹H-NMR (100 MHz, CDCl3, TMS): 7.32-7.01 (13 H, m, arom. Protonen), 6.73-5.63 (1 H, m, olefin. Proton), 4.10 (1 H, s, aliph. Fluoren-Proton) 3.50, 3.17 (2 H, m, aliph. Cp-Protonen), 1.79 (3 H, s, Methylprotonen), 1.29-1.20 (2 H, m, Methylenprotonen), 1.03 (3 H, s, Methylprotonen), 0.35 (3 H, s, Methylprotonen), IR (KBr, n (cm-1]) : 3058, 3033, 2949, 2925, 2860, 1446, 1168, 746, 693.

Massenspektrum: m/z = 388 (C₃₀H₂₈, Molpeak)

### Beispiel 6

### Herstellung von [4-(h⁵-Fluorenyl)-4,6,6-trimethyl-(2-phenyl-h⁵tetrahydropentalen]dichlorozirconium

7.0 ml (11 mmol) n-Butyllithiums, 1.6 molar in n-Hexan, tropfen bei Raumtemperatur zu 1.5 g (3.9 mmol) 1-Fluorenyl-2,3-dihydro-1,3,3-trimethyl-5-phenylpentalen in 50 ml THF. Nach 12-stündigem Rühren wird kurz zum Sieden erhitzt und der durch Abkondensieren der Lösungsmittel erhaltene Niederschlag zweimal mit 50 ml Pentan gewaschen. Nach Dekantieren des Pentans werden 1.0 g (4.3 mmol) Zirkoniumtetrachlorid sowie 50 ml Pentan zugefügt und drei Tage bei Raumtemperatur gerührt. Nach Abkondensieren des Pentans wird der Rückstand mit Methylenchlorid extrahiert. Nach Einengen des Lösungsmittels werden 350 mg (0.6 mmol, 15 % bezogen auf Zirkoniumtetrachlorid) des Produktes als kristailiner, roter Feststoff erhalten.

¹H-NMR (100MHz, C₂D₂Cl₄) : 7.99-7.75, 7.52-6.93 (13 H, m, arom. Protonen), 6.31, 5.50 (2 H, m, arom. Cp-Protonen), 3.98 (1 H, d, J = 15 Hz, Methylenproton), 2.63 (1 H, d, J = 15 Hz, Methylenproton), 2.35 (3 H, s, Methylprotonen), 1.40 (3 H, s, Methylprotonen), 1.34 (3 H, s, Methylprotonen)

Massenspektrum: m/z = 548 (C₃₀H₂₆ZrCl₂, Molpeak mit korrekter Isotopenverteilung)

### Beispiel 7:

### Ethylenpolymerisation

In einem 1 dm³-Glasautoklaven, der vorher gründlich mit Argon gespült und auf Polymerisationstemperatur (30°C) gebracht wurde, wurden im Argongegenstrom

100 cm³ Toluol und 150 mg toluolische Methylaluminoxanlösung (10 gew.-%ige Ethylaluminoxanlösung der Molmasse 1300 g/mol nach kryoskopischer Bestimmung) vorgelegt. Durch mehrfaches Aufdrücken von Ethylen (2,5 bar) wurde die Lösung mit Ethylen gesättigt. Eine Lösung von 5x10⁻⁷ mol [4-(h⁵-Fluorenyl)-4,6,6-trimethyl-(2-phenyl-h⁵-tetrahydropentalen]dichlorozirconium in 1 cm³ wurde im leichten Ethylen-Gegenstrom zugegeben.

Unter Rühren wurde eine Stunde polymerisiert, wobei der Ethylendruck durch Nachdosieren bei 2,5 bar gehalten wurde.

Nach Ende der Reaktionszeit wurde das Ethylen aus dem Reaktor abgelassen und das Polymerisationsgemisch mit wenig Ethanol gerührt. Es wurde dann aus dem Reaktor abgelassen und über Nacht mit einer 10%igen ethanolischen Salzsäurelösung gerührt. Anschließend wurde mit gesättigter NaHCO₃-Lösung sowie zweimal mit etwa 100 cm³ Wasser gewaschen. Das abfiltrierce Polymer wurde bei 60°C bis zur Gewichtskonstanz im Vakuum getrocknet.

Nach der Trocknung wurden 0,55 g farbloses Polymer erhalten, welches eine Molmasse von 540000 g/mol aufwies.

### Beispiel 8-12:

### Ethylenpolymerisation

Die Polymerisation und Aufarbeitung wurde durchgeführt wie in Beispiel 7 beschrieben.

Abweichend von Beispiel 7 wurden jeweils 400 ml Toluol und 600 mg toluolische Methylaluminoxanlösung (10 Gew.-%ige Methylaluminoxanlösung der Molmasse 1300 g/mol nach kryoskopischer Bestimmung) vorgelegt. Als Katalysator wurde [Isopropyliden-(3-phenylcyclopentadienyl]-9-fluorenyl]zirkoniumdichlorid verwendet.

Die Einzelheiten der Polymerisationsdurchführung und der Ergebnisse sind in Tabelle 1 zusammengefaßt.

**Tabelle 1:**

| Beispiel | Ethendruck [bar] | Reakrionstemperatur [°C] | Katalysatormenge [mol] | Polymerisationsdauer [h] | Polymerausbeute [g] | Molmasse [g/mol] |
|---|---|---|---|---|---|---|
| 8 | 1,54 | 0 | 8x10⁻⁷ | 3,66 | 0,98 | 740000 |
| 9 | 1,98 | 15 | 8x10⁻⁷ | 1,42 | 2,90 | 750000 |
| 10 | 2,50 | 30 | 1,6x10⁻⁷ | 3,37 | 7,60 | 530000 |
| 11 | 3,10 | 15 | 4x10⁻⁸ | 1 | 2,98 | 260000 |
| 12 | 3,57 | 60 | 4x10⁻⁸ | 0,66 | 5,22 | 165000 |

### Beispiel 13, 14

### Propylenpolymerisation

Die Polymerisation wurde durchgeführt analog zu Beispiel 7. Abweichend von Beispiel 7 wurden jedoch jeweils 200 ml Toluol und toluolische Methylaluminoxanlösung (10 Gew.-%ige Methylaluminoxanlösung der Molmasse 1300 g/mol nach kryoskopischer Bestimmung) vorgelegt. Der Reaktionsdruck wurde bei 2,0 bar gehalten, die Polymerisationstemperatur lag bei 30°C. Es wurden 2x10⁻⁶ mol des Katalysators in toluolischer Lösung eingesetzt. Die Polymerisationsdauer betrug 1 Stunde.

Nach Ende der Reakpionszeit wurde das Propylen aus dem Reaktor abgelassen und das Polymerisationsgemisch mit wenig Ethanol gerührt. Es wurde dann aus dem Reaktor abgelassen und durch Eintropfen in Ethanol gefällt. Das abfiltrierte Polymer wurde bei 60°C bis zur Gewichtskonstanz im Vakuum getrocknet.

Die Einzelheiten der Polymerisationsdurchführung und der Ergebnisse sind in Tabelle 2 zusammengefaßt.

**Tabelle 2:**

| Beispiel | vorgelegte Menge MAO [mg] | Katalysator | Polymerausbeute [g] | Molmasse (viskosim.) [g/mol] |
|---|---|---|---|---|
| 13 | 330 | [4-(h⁵-Fluorenyl)-4,6,6-trimethyl-(2-phenyl-h⁵-tetrahydropentalen]dichlorozirconium | 0,75 | |
| 14 | 300 | [Isopropyliden-(3-phenylcyclopentadienyl)-9-fluorenyl]zirkoniumdichlorid | 9,67 | 60000 |

### Beispiel 15-19

### Norbornen-Ethylen-Copolymerisation

In einem 1 dm³-Glasautoklaven, der vorher gründlich mit Argon gespült und auf Polymerisationstemperatur (30°C) gebracht wurde, wurden im Argongegenstrom eine Lösung von Norbornen in 200 ml Toluol und 500 mg toluolische Methylaluminoxanlösung (10 gew.-%ige Methylaluminoxanlösung der Molmasse 1300 g/mol nach kryoskopischer Bestimmung) vorgelegt. Durch mehrfaches Aufdrücken von Ethylen (2,0 bar) wurde die Lösung mit Ethylen gesättigt. Eine Lösung von 5x10⁻⁷ mol [Isopropyliden-(3-phenylcyclopentadienyl)-9-fluorenyl]zirkoniumdichlorid in 1 cm³ wurde im leichten Ethylen-Gegenstrom zugegeben.

Unter Rühren wurde polymerisiert, wobei der Ethylendruck durch Nachdosieren bei 2,0 bar gehalten wurde.

Nach Ende der Reaktionszeit wurde das Ethylen aus dem Reaktor abgelassen und das Polymerisationsgemisch mit wenig Ethanol gerührt. Es wurde dann aus dem Reaktor abgelassen und durch Eintropfen in Ethanol gefällt. Das abfiltrierte Polymer wurde bei 60°C bis zur Gewichtskonstanz im Vakuum getrocknet.

Die Einzelheiten der Polymerisationsdurchführung und der Ergebnisse sind in Tabelle 3 zusammengefaßt.

**Tabelle 3**

| Beispiel | vorgelegte Menge Norbornen [ml], bezogen auf eine 7 N Lösung von Norbornen in Toluol | Polymerisationsdauer [h] | Polymerausbeute [g] | Einbaurate Norbornen |
|---|---|---|---|---|
| 15 | 1,7 | 0,17 | 0,69 | |
| 16 | 4,5 | 0,2 | 0,66 | |
| 17 | 10,2 | 1,08 | 1,73 | 0,19 |
| 18 | 27,3 | 2 | 1,37 | |
| 19 | 61,4 | 3 | 1,55 | 0,39 |

## Patentansprüche (Patentansprüche für folgende(n) Vertragsstaat(en): BE, ES, GB, IT)

1. Stereorigide Metallocenverbindung der Formel I, 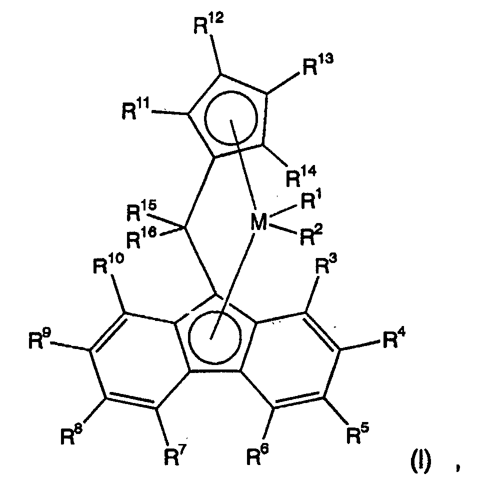 worin
M ein Metall der Gruppe IIIb, IVb, Vb oder VIb des Periodensystems der Elemente ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy-, eine C₆-C₁₀-Aryl-, eine C₆-C₂₅-Aryloxy-, eine C₂-C₁₀-Alkenyl-, eine C₇-C₄₀-Arylalkyl- oder eine C₇-C₄₀-Arylalkenylgruppe, eine OH-Gruppe, ein Halogenatom oder NR¹⁵₂, worin R¹⁵ ein Halogenatom, eine C₁-C₁₀-Alkylgruppe oder eine C₆-C₁₀-Arylgruppe ist, bedeuten, oder R¹ und R² zusammen mit den sie verbindenden Atomen ein Ringsystem bilden,
R³, R⁴, R⁵, R⁶, R⁷, R⁸, R⁹, R¹⁰, R¹¹, R¹⁴, R¹⁵ und R¹⁶ gleich oder verschieden sind und ein Wasserstoffatom, eine C₁-C₄₀-kohlenstoffhaltige Gruppe wie eine C₁-C₁₀-Alkylgruppe, die halogeniert sein kann, eine C₆-C₃₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl-, oder eine C₈-C₄₀-Arylalkenylgruppe, ein Halogenatom, einen SiR¹⁷₃-, -NR¹⁷₂-, -SiOR¹⁷₃-, -SiSR¹⁷₃- oder -PR¹⁷₂-Rest bedeuten, worin R¹⁷ gleich oder verschieden ein Halogenatom, eine C₁-C₁₀-Alkylgruppe oder eine C₆-C₁₀-Arylgruppe sind oder ein Ringsystem bilden, oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenen Atomen ein Ringsystem bilden, welches bevorzugt 4 bis 40, besonders bevorzugt 6 bis 20 Kohlenstoffatome enthält,
und R¹² und R¹³ gleich oder verschieden sind und ein Wasserstoffatom, oder eine C₆-C₃₀-arylhaltige Gruppe sind, und mindestens einer der Reste R¹² und R¹³ von einem Wasserstoffatom verschieden ist.

2. Stereorigide Metallocenverbindung der Formel I gemäß Anspruch 1, worin
M ein Metall der Gruppe IVb des Periodensystems der Elemente wie Titan, zirkonium oder Hafnium, insbesondere Zirkonium ist,
R¹ und R² gleich sind und eine C₁-C₄-Alkylgruppe oder ein Halogenatom wie Fluor, Chlor, Brom oder Jod, insbesondere Chlor bedeuten,
R³, R⁴, R⁵, R⁶, R⁷, R⁸, R⁹, R¹⁰, R¹¹, R¹⁴, R¹⁵ und R¹⁶ gleich oder verschieden sind und ein Wasserstoffatom, eine C₁-C₁₀-Alkylgruppe oder eine C₆-C₂₄-Arylgruppe, oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenden Atomen ein aromatisches oder aliphatisches Ringsystem mit 4 bis 20 Kohlenstoffatome bilden,
und R¹² und R¹³ gleich oder verschieden sind und ein Wasserstoffatom oder eine C₆-C₂₄-Arylgruppe sind.

3. Stereorigide Metallocenverbindung der Formel I gemäß Anspruch 1, worin
M Zirkonium ist,
R¹ und R² gleich sind und ein Halogenatom, insbesondere Chlor bedeuten,
R³, R⁴, R⁵, R⁶, R⁷, R⁸, R⁹, R¹⁰, R¹¹, R¹⁴, R¹⁵ und R¹⁶ gleich oder verschieden sind und ein Wasserstoffatom, eine C₁-C₄-Alkylgruppe wie Methyl, Ethyl, Propyl, Isopropyl, Butyl, tert.-Butyl oder Isobutyl oder eine C₆-C₁₄-Arylgruppe wie Phenyl oder Naphthyl bedeuten oder R¹⁴ und R¹⁵ ein Ringsystem bilden.

4. Katalysator enthaltend a) mindestens eine stereorigide Metallocenverbindung der Formel I gemäß einem oder mehreren der Ansprüche 1 bis 3 und b) mindestens einen Cokatalysator.

5. Katalysator gemäß Anspruch 4, worin der Cokatalysator ein Aluminoxan ist.

6. Katalysator gemäß Anspruch 4 oder 5 zusätzlich enthaltend einen Träger.

7. Katalysator, erhältlich durch Kombination a) mindestens einer stereorigiden Metallocenverbindung der Formel I gemäß einem oder mehreren der Ansprüche 1 bis 3 und b) mindestens eines Cokatalysators.

8. Katalysator gemäß Anspruch 7, zusätzlich enthaltend einen Träger.

9. Verfahren zur Herstellung eines Polyolefins durch Polymerisation mindestens eines Olefins in Gegenwart eines Katalysators gemäß einem oder mehreren der Ansprüche 4 bis 8.

10. Verfahren gemäß Anspruch 9, wobei eines oder mehrere Olefine der Formel R^{a}-CH=CH-R^{b} polymerisiert werden, worin R^{a} und R^{b} gleich oder verschieden sind und ein Wasserstoffatom oder einen Kohlenwasserstoffrest mit 1 bis 20 C-Atomen bedeuten, und R^{a} und R^{b} zusammen mit den sie verbindenen Atomen einen oder mehrere Ringe bilden können.

11. Verwendung einer stereorigiden Metallocenverbindung gemäß einem oder mehreren der Ansprüche 1 bis 3, zur Olefinpolymerisation.

## Patentansprüche (Patentansprüche für folgende(n) Vertragsstaat(en): DE, FR, NL)

1. Stereorigide Metallocenverbindung der Formel I, 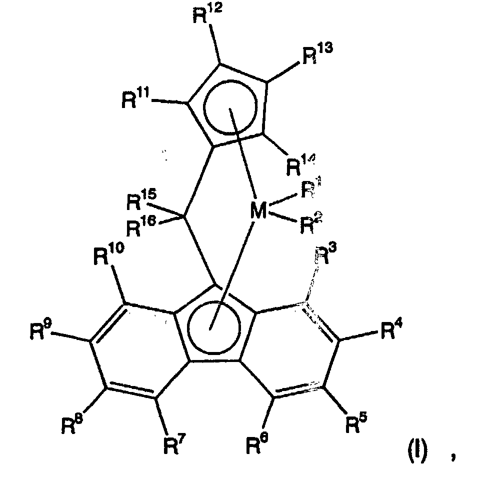 worin
M ein Metall der Gruppe IIIb, IVb, Vb oder VIb des Periodensystems der Elemente ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy-, eine C₆-C₁₀-Aryl-, eine C₆-C₂₅-Aryloxy-, eine C₂-C₁₀-Alkenyl-, eine C₇-C₄₀-Arylalkyl- oder eine C₇-C₄₀-Arylalkenylgruppe, eine OH-Gruppe, ein Halogenatom oder NR¹⁵₂, worin R¹⁵ ein Halogenatom, eine C₁-C₁₀-Alkylgruppe oder eine C₆-C₁₀-Arylgruppe ist, bedeuten, oder R¹ und R² zusammen mit den sie verbindenden Atomen ein Ringsystem bilden,
R³, R⁴, R⁵, R⁶, R⁷, R⁸, R⁹, R¹⁰, R¹¹ und R¹⁴ gleich oder verschieden sind und ein Wasserstoffatom, eine C₁-C₄₀-kohlenstoffhaltige Gruppe wie eine C₁-C₁₀-Alkylgruppe, die halogeniert sein kann, eine C₆-C₃₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl-, oder eine C₈-C₄₀-Arylalkenylgruppe, ein Halogenatom, einen SiR¹⁷₃-, -NR¹⁷₂-, -SiOR¹⁷₃-, -SiSR¹⁷₃-oder -PR¹⁷₂-Rest bedeuten, worin R¹⁷ gleich oder verschieden ein Halogenatom, eine C₁-C₁₀-Alkylgruppe oder eine C₆-C₁₀-Arylgruppe sind oder ein Ringsystem bilden,
R¹⁵ und R¹⁶ gleich oder verschieden sind und ein Wasseratoffatom, eine C₁-C₁₀-Alkylgruppe, die halogeniert sein kann, eine C₆-C₂₀-Aryloxy-, eine C₂-C₁₂-Alkenyl-, eine C₇-C₄₀-Arylalkyl-, oder eine C₈-C₄₀-Arylalkenylgruppe, ein Halogenatom, einen SiR¹⁷₃-, -NR¹⁷₂-, -SiOR¹⁷₃-, -SiSR¹⁷₃- oder -PR¹⁷₂-Rest bedeuten, worin R¹⁷ gleich oder verschieden ein Halogenatom, eine C₁-C₁₀-Alkylgruppe oder eine C₆-C₁₀-Arylgruppe sind oder ein Ringsystem bilden, oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenen Atomen ein Ringsystem bilden, welches bevorzugt 4 bis 40, besonders bevorzugt 6 bis 20 Kohlenstoffatome enthält,
und R¹² und R¹³ gleich oder verschieden sind und ein Wasserstoffatom, oder eine C₆-C₃₀-arylhaltige Gruppe sind, und mindestens einer der Reste R¹² und R¹³ von einem Wasserstoffatom verschieden ist.

2. Stereorigide Metallocenverbindung der Formel I gemäß Anspruch 1, worin
M ein Metall der Gruppe IVb des Periodensystems der Elemente wie Titan, Zirkonium oder Hafnium, insbesondere Zirkonium ist,
R¹ und R² gleich sind und eine C₁-C₄-Alkylgruppe oder ein Halogenatom wie Fluor, Chlor, Brom oder Jod, insbesondere Chlor bedeuten,
R³, R⁴, R⁵, R⁶, R⁷, R⁸, R⁹, R¹⁰, R¹¹ und R¹⁴ gleich oder verschieden sind und ein wasserstoffatom, eine C₁-C₁₀-Alkylgruppe oder eine C₆-C₂₄-Arylgruppe bedeuten,
R¹⁵ und R¹⁶ gleich oder verschieden sind und ein Wasserstoffatom oder eine C₁-C₁₀-Alkylgruppe bedeuten,
oder zwei oder mehr benachbarte Reste R³, R⁴, R⁵, R⁶, R⁷, R⁸, R⁹, R¹⁰, R¹¹, R¹⁴, R¹⁵ und R¹⁶ zusammen mit den sie verbindenden Atomen ein aromatisches oder aliphatisches Ringsystem mit 4 bis 20 Kohlenstoffatome bilden,
und R¹² und R¹³ gleich oder verschieden sind und ein Wasserstoffatom oder eine C₆-C₂₄-Arylgruppe sind.

3. Stereorigide Metallocenverbindung der Formel I gemäß Anspruch 1, worin
M Zirkonium ist,
R¹ und R² gleich sind und ein Halogenatom, insbesondere Chlor bedeuten,
R³, R⁴, R⁵, R⁶, R⁷, R⁸, R⁹, R¹⁰, R¹¹ und R¹⁴ gleich oder verschieden sind und ein Wasserstoffatom, eine C₁-C₄-Alkylgruppe wie Methyl, Ethyl, Propyl, Isopropyl, Butyl, tert.-Butyl oder Isobutyl oder eine C₆-C₁₄-Arylgruppe wie Phenyl oder Naphthyl bedeuten,
R¹⁵ und R¹⁶ gleich oder verschieden sind und ein Wasserstoffatom oder eine C₁-C₄-Alkylgruppe wie Methyl, Ethyl, Propyl, Isopropyl, Butyl, tert.-Butyl oder Isobutyl bedeuten, oder R¹⁴ und R¹⁵ ein Ringsystem bilden.

4. Katalysator enthaltend a) mindestens eine stereorigide Metallocenverbindung der Formel I gemäß einem oder mehreren der Ansprüche 1 bis 3 und b) mindestens einen Cokatalysator.

5. Katalysator gemäß Anspruch 4, worin der Cokatalysator ein Aluminoxan ist.

6. Katalysator gemäß Anspruch 4 oder 5 zusätzlich enthaltend einen Träger.

7. Katalysator, erhältlich durch Kombination a) mindestens einer stereorigiden Metallocenverbindung der Formel I gemäß einem oder mehreren der Ansprüche 1 bis 3 und b) mindestens eines Cokatalysators.

8. Katalysator gemäß Anspruch 7, zusätzlich enthaltend einen Träger.

9. Verfahren zur Herstellung eines Polyolefins durch Polymerisation mindestens eines Olefins in Gegenwart eines Katalysators gemäß einem oder mehreren der Ansprüche 4 bis 8.

10. Verfahren gemäß Anspruch 9, wobei eines oder mehrere Olefine der Formel R^{a}-CH=CH-R^{b} polymerisiert werden, worin R^{a} und R^{b} gleich oder verschieden sind und ein Wasserstoffatom oder einen Kohlenwasserstoffrest mit 1 bis 20 C-Atomen bedeuten, und R^{a} und R^{b} zusammen mit den sie verbindenen Atomen einen oder mehrere Ringe bilden können.

11. Verwendung einer stereorigiden Metallocenverbindung gemäß einem oder mehreren der Ansprüche 1 bis 3, zur Olefinpolymerisation.

## Claims (Claims for the following Contracting State(s): BE, ES, GB, IT)

1. Stereorigid metallocene compound of the formula I, 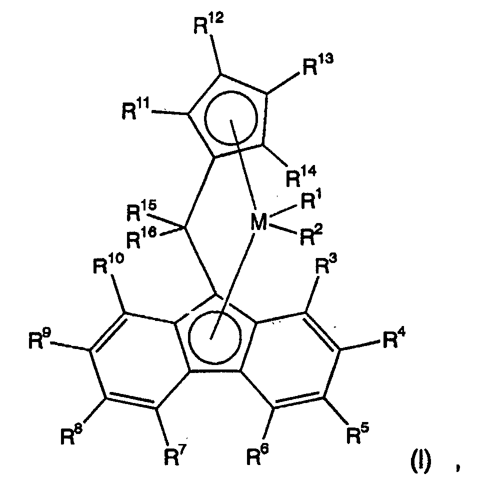 where
M is a metal of Group IIIb, IVb, Vb or VIb of the Periodic Table of the Elements,
R¹ and R² are identical or different and are each hydrogen, a C₁-C₄₀-hydrocarbon-containing group, such as C₁-C₁₀-alkyl, C₁-C₁₀-alkoxy, C₆-C₁₀-aryl, C₆-C₂₅-aryloxy, C₂-C₁₀-alkenyl, C₇-C₄₀-arylalkyl or C₇-C₄₀-arylalkenyl, OH, halogen or NR¹⁵₂, where R¹⁵ is halogen, C₁-C₁₀-alkyl or C₆-C₁₀-aryl, or R¹ and R², together with the atoms linking them, form a ring system,
R³, R⁴, R⁵, R⁶, R⁷, R⁸, R⁹, R¹⁰, R¹¹, R¹⁴, R¹⁵ and R¹⁶ are identical or different and are each hydrogen, a C₁-C₄₀-hydrocarbon-containing group, such as C₁-C₁₀-alkyl, which may be halogenated, C₆-C₃₀-aryl, which may be halogenated, C₆-C₂₀-aryloxy, C₂-C₁₂-alkenyl, C₇-C₄₀-arylalkyl, C₇-C₄₀-alkylaryl or C₈-C₄₀-arylalkenyl, halogen, SiR¹⁷₃, NR¹⁷₂, SiOR¹⁷₃, SiSR¹⁷₃ or PR¹⁷₂, where R¹⁷ are identical or different and are each halogen, C₁-C₁₀-alkyl or C₆-C₁₀-aryl or form a ring system, or two or more neighboring radicals R³, R⁴, R⁵, R⁶, R⁷, R⁸, R⁹, R¹⁰, R¹¹, R¹⁴, R¹⁵ and R¹⁶, together with the atoms linking them, form a ring system which preferably contains 4 to 40, particularly preferably 6 to 20, carbon atoms,
and R¹² and R¹³ are identical or different and are each hydrogen or a C₆-C₃₀-aryl-containing group, and at least one of the radicals R¹² and R¹³ is not hydrogen.

2. A stereorigid metallocene compound of the formula I as claimed in claim 1, where
M is a metal of Group IVb of the Periodic Table of the Elements such as titanium, zirconium or hafnium, in particular zirconium,
R¹ and R² are identical and are each C₁-C₄-alkyl or halogen, such as fluorine, chlorine, bromine or iodine, in particular chlorine,
R³, R⁴, R⁵, R⁶, R⁷, R⁸, R⁹, R¹⁰, R¹¹, R¹⁴, R¹⁵ and R¹⁶ are identical or different and are each hydrogen, C₁-C₁₀-alkyl or C₆-C₂₄-aryl, or two or more neighboring radicals R³, R⁴, R⁵, R⁶, R⁷, R⁸, R⁹, R¹⁰, R¹¹, R¹⁴, R¹⁵ and R¹⁶, together with the atoms linking them, form an aromatic or aliphatic ring system of 4 to 20 carbon atoms,
and R¹² and R¹³ are identical or different and are each hydrogen or C₆-C₂₄-aryl.

3. A stereorigid metallocene compound of the formula I as claimed in claim 1, where
M is zirconium,
R¹ and R² are identical and are each halogen, in particular chlorine,
R³, R⁴, R⁵, R⁶, R⁷, R⁸, R⁹, R¹⁰, R¹¹, R¹⁴, R¹⁵ and R¹⁶ are identical or different and are each hydrogen, C₁-C₄-alkyl, such as methyl, ethyl, propyl, isopropyl, butyl, tert-butyl or isobutyl, or C₆-C₁₄-aryl, such as phenyl or naphthyl, or R¹⁴ and R¹⁵ form a ring system.

4. A catalyst containing a) at least one stereorigid metallocene compound of the formula I as claimed in one or more of claims 1 to 3 and b) at least one cocatalyst.

5. A catalyst as claimed in claim 4, wherein the cocatalyst is an aluminoxane.

6. A catalyst as claimed in claim 4 or 5, additionally containing a carrier.

7. A catalyst obtainable by combining a) at least one stereorigid metallocene compound of the formula I as claimed in one or more of claims 1 to 3 and b) at least one cocatalyst.

8. A catalyst as claimed in claim 7, additionally containing a carrier.

9. A process for the preparation of a polyolefin by polymerizing at least one olefin in the presence of a catalyst as claimed in one or more of claims 4 to 8.

10. A process as claimed in claim 9, one or more olefins of the formula R^{a}-CH=CH-R^{b}, where R^{a} and R^{b} are identical or different and are each hydrogen or a hydrocarbon radical of 1 to 20 carbon atoms, and R^{a} and R^{b}, together with the atoms linking them, may form one or more rings, being polymerized.

11. The use of a stereorigid metallocene compound as claimed in one or more of claims 1 to 3 for olefin polymerization.

## Claims (Claims for the following Contracting State(s): DE, FR, NL)

1. Stereorigid metallocene compound of the formula I, 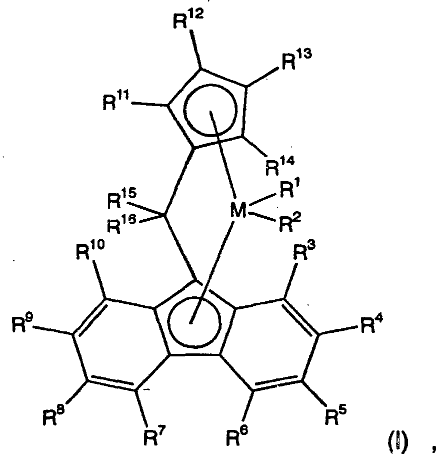 where
M is a metal of Group IIIb, IVb, Vb or VIb of the Periodic Table of the Elements,
R¹ and R² are identical or different and are each hydrogen, a C₁-C₄₀-hydrocarbon-containing group, such as C₁-C₁₀-alkyl, C₁-C₁₀-alkoxy, C₆-C₁₀-aryl, C₆-C₂₅-aryloxy, C₂-C₁₀-alkenyl, C₇-C₄₀-arylalkyl or C₇-C₄₀-arylalkenyl, OH, halogen or NR¹⁵₂, where R¹⁵ is halogen, C₁-C₁₀-alkyl or C₆-C₁₀-aryl, or R¹ and R², together with the atoms linking them, form a ring system,
R³, R⁴, R⁵, R⁶, R⁷, R⁸, R⁹, R¹⁰, R¹¹ and R¹⁴ are identical or different and are each hydrogen, a C₁-C₄₀-hydrocarbon- containing group, such as C₁-C₁₀-alkyl, which may be halogenated, C₆-C₃₀-aryl, which may be halogenated, C₆-C₂₀-aryloxy, C₂-C₁₂-alkenyl, C₇-C₄₀-arylalkyl, C₇-C₄₀-alkylaryl or C₈-C₄₀-arylalkenyl, halogen, SiR¹⁷₃, NR¹⁷₂, SiOR¹⁷₃, SiSR¹⁷₃ or PR¹⁷₂, where R¹⁷ are identical or different and are each halogen, C₁-C₁₀-alkyl or C₆-C₁₀-aryl or form a ring system,
R¹⁵ and R¹⁶ are identical or different and are each hydrogen, C₁-C₁₀-alkyl which may be halogenated, C₆-C₂₀-aryloxy, C₂-C₁₂-alkenyl, C₇-C₄₀-arylalkyl or C₈-C₄₀-arylalkenyl, halogen or an SiR¹⁷₃, -NR¹⁷₂-, -SiOR¹⁷₃-, -SiSR¹⁷₃-, or -PR¹⁷₂- radical, in which the R¹⁷ radicals are identical or different and are each halogen C₁-C₁₀-alkyl or C₆-C₁₀-aryl or form a ring system,
or two or more neighboring radicals R³, R⁴, R⁵, R⁶, R⁷, R⁸, R⁹, R¹⁰, R¹¹, R¹⁴, R¹⁵ and R¹⁶, together with the atoms linking them, form a ring system which preferably contains 4 to 40, particularly preferably 6 to 20, carbon atoms,
and R¹² and R¹³ are identical or different and are each hydrogen or a C₆-C₃₀-aryl-containing group, and at least one of the radicals R¹² and R¹³ is not hydrogen.

2. A stereorigid metallocene compound of the formula I as claimed in claim 1, where
M is a metal of Group IVb of the Periodic Table of the Elements such as titanium, zirconium or hafnium, in particular zirconium,
R¹ and R² are identical and are each C₁-C₄-alkyl or halogen, such as fluorine, chlorine, bromine or iodine, in particular chlorine,
R³, R⁴, R⁵, R⁶, R⁷, R⁸, R⁹, R¹⁰, R¹¹ and R¹⁴ are identical or different and are each hydrogen, C₁-C₁₀-alkyl or C₆-C₂₄-aryl,
R¹⁵ and R¹⁶ are identical or different and are each hydrogen or C₁-C₁₀-alkyl,
or two or more neighboring radicals R³, R⁴, R⁵, R⁶, R⁷, R⁸, R⁹, R¹⁰, R¹¹, R¹⁴, R¹⁵ and R¹⁶, together with the atoms linking them, form an aromatic or aliphatic ring system of 4 to 20 carbon atoms,
and R¹² and R¹³ are identical or different and are each hydrogen or C₆-C₂₄-aryl.

3. A stereorigid metallocene compound of the formula I as claimed in claim 1, where
M is zirconium,
R¹ and R² are identical and are each halogen, in particular chlorine,
R³, R⁴, R⁵, R⁶, R⁷, R⁸, R⁹, R¹⁰, R¹¹ and R¹⁴ are identical or different and are each hydrogen, C₁-C₄-alkyl, such as methyl, ethyl, propyl, isopropyl, butyl, tert-butyl or isobutyl, or C₆-C₁₄-aryl, such as phenyl or naphthyl,
R¹⁵ and R¹⁶ are identical or different and are each hydrogen or C₁-C₄-alkyl such as methyl, ethyl, propyl, isopropyl, butyl, tert-butyl or isobutyl, or R¹⁴ and R¹⁵ form a ring system.

4. A catalyst containing a) at least one stereorigid metallocene compound of the formula I as claimed in one or more of claims 1 to 3 and b) at least one cocatalyst.

5. A catalyst as claimed in claim 4, wherein the cocatalyst is an aluminoxane.

6. A catalyst as claimed in claim 4 or 5, additionally containing a carrier.

7. A catalyst obtainable by combining a) at least one stereorigid metallocene compound of the formula I as claimed in one or more of claims 1 to 3 and b) at least one cocatalyst.

8. A catalyst as claimed in claim 7, additionally containing a carrier.

9. A process for the preparation of a polyolefin by polymerizing at least one olefin in the presence of a catalyst as claimed in one or more of claims 4 to 8.

10. A process as claimed in claim 9, one or more olefins of the formula R^{a}-CH=CH-R^{b}, where R^{a} and R^{b} are identical or different and are each hydrogen or a hydrocarbon radical of 1 to 20 carbon atoms, and R^{a} and R^{b}, together with the atoms linking them, may form one or more rings, being polymerized.

11. The use of a stereorigid metallocene compound as claimed in one or more of claims 1 to 3 for olefin polymerization.

## Revendications (Revendications pour l'(les) Etat(s) contractant(s) suivant(s): BE, ES, GB, IT)

1. Métallocène stéréorigide de formule I 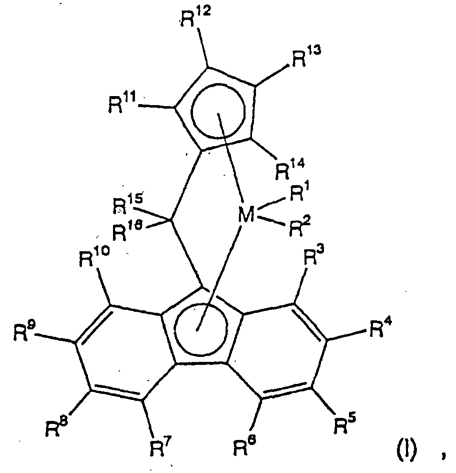 dans laquelle
M représente un métal du groupe IIIb, IVb, Vb ou VIb de la Classification Périodique des éléments,
R¹ et R², ayant des significations identiques ou différentes, réprésentent chacun un atome d'hydrogène, un groupe carboné en C1-C40 tel qu'un groupe alkyle en C1-C10, alcoxy en C1-C10, aryle en C6-C10, aryloxy en C6-C25, alcényle en C2-C10, arylalkyle en C7-C40 ou arylalcényle en C7-C40, un groupe OH, un atome d'halogène ou un groupe NR¹⁵₂ dans lequel R¹⁵ représente un atome d'halogène, un groupe alkyle en C1-C10 ou un groupe aryle en C6-C10, ou bien R¹ et R² forment ensemble et avec les atomes qui les relient un système cyclique,
R³, R⁴, R⁵, R⁶, R⁷, R⁸, R⁹, R¹⁰, R¹¹, R¹⁴, R¹⁵ et R¹⁶, ayant des significations identiques ou différentes, représentent chacun un atome d'hydrogène, un groupe carboné en C1-C40 tel qu'un groupe alkyle en C1-C10 qui peut être halogéné, un groupe aryle en C6-C30 qui peut être halogéné, un groupe aryloxy en C6-C20, alcényle en C2-C12, arylalkyle en C7-C40, alkylaryle en C7-C40 ou arylalcényle en C8-C40, un atome d'halogène, un groupe SiR¹⁷₃, -NR¹⁷₂, -SiOR¹⁷₃, -SiSR¹⁷₃ ou -PR¹⁷₂ dans lequel les symboles R¹⁷, ayant des significations identiques ou différentes, représentent chacun un atome d'halogène, un groupe alkyle en C1-C10 ou aryle en C6-C10 ou bien forment ensemble un système cyclique, ou bien deux groupes voisins ou plus parmi les groupes R³, R⁴, R⁵, R⁶, R⁷, R⁸, R⁹, R¹⁰, R¹¹, R¹⁴, R¹⁵ et R¹⁶ forment ensemble et avec les atomes qui les relient un système cyclique contenant de préférence 4 à 40 et plus spécialement 6 à 20 atomes de carbone,
et R¹² et R¹³, ayant des significations identiques ou différentes, représentent chacun un atome d'hydrogène ou un groupe en C6-C30 contenant un radical aryle, et au moins un des symboles R¹² et R¹³ a une signification autre que l'hydrogène.

2. Métallocène stéréorigide de formule I selon la revendication 1, dans laquelle:
M représente un métal du groupe IVb de la Classification Périodique des éléments, par exemple le titane, le zirconium ou le hafnium, plus spécialement le zirconium,
R¹ et R² ont des significations identiques et représentent un groupe alkyle en Cl-C4 ou un atome d'halogène, par exemple de fluor, de chlore, de brome ou d'iode, plus spécialement de chlore,
R³, R⁴, R⁵, R⁶, R⁷, R⁸, R⁹, R¹⁰, R¹¹, R¹⁴, R¹⁵ et R¹⁶, ayant des significations identiques ou différentes, représentent chacun un atome d'hydrogène, un groupe alkyle en C1-C10 ou un groupe aryle en C6-C24, ou bien deux groupes voisins ou plus parmi les groupes R³, R⁴, R⁵, R⁶, R⁷, R⁸, R⁹, R¹⁰, R¹¹, R¹⁴, R¹⁵ et R¹⁶ forment ensemble et avec les atomes qui les relient un système cyclique aromatique ou aliphatique contenant 4 à 20 atomes de carbone,
et R¹² et R¹³, ayant des significations identiques ou différentes, représentent chacun un atome d'hydrogène ou un groupe aryle en C6-C24.

3. Métallocène stéréorigide de formule I selon la revendication 1, dans laquelle:
M représente le zirconium,
R¹ et R² ont des significations identiques et représentent chacun un atome d'halogène, plus spécialement de chlore,
R³, R⁴, R⁵, R⁶, R⁷, R⁸, R⁹, R¹⁰, R¹¹, R¹⁴, R¹⁵ et R¹⁶, ayant des significations identiques ou différentes, représentent chacun un atome d'hydrogène, un groupe alkyle en C1-C4 tel que méthyle, éthyle, propyle, isopropyle, butyle, tert-butyle ou isobutyle, ou un groupe aryle en C6-C14 tel que phényle ou naphtyle, ou bien R¹⁴ et R¹⁵ forment un système cyclique.

4. Catalyseur contenant a) au moins un métallocène stéréorigide de formule I selon une ou plusieurs des revendications 1 à 3, et b) au moins un catalyseur auxiliaire.

5. Catalyseur selon la revendication 4, pour lequel le catalyseur auxiliaire est un aluminoxane.

6. Catalyseur selon la revendication 4 ou 5, contenant en outre un support.

7. Catalyseur obtenu en combinant a) au moins un métallocène stéréorigide de formule I selon une ou plusieurs des revendications 1 à 3 et b) au moins un catalyseur auxiliaire.

8. Catalyseur selon la revendication 7, contenant en outre un support.

9. Procédé pour la préparation d'une polyoléfine par polymérisation d'au moins une oléfine en présence d'un catalyseur selon une ou plusieurs des revendications 4 à 8.

10. Procédé selon la revendication 9, selon lequel on polymérise une ou plusieurs oléfines de formule R^{a}-CH=CH-R^{b} dans laquelle R^{a} et R^{b}, ayant des significations identiques ou différentes, représentent chacun un atome d'hydrogène ou un radical hydrocarboné en C1-C20, R^{a} et R^{b} pouvant également former ensemble et avec les atomes qui les relient un ou plusieurs cycles.

11. Utilisation d'un métallocène stéréorigide selon une ou plusieurs des revendications 1 à 3 pour la polymérisation d'oléfines.

## Revendications (Revendications pour l'(les) Etat(s) contractant(s) suivant(s): DE, FR, NL)

1. Métallocène stéréorigide de formule I 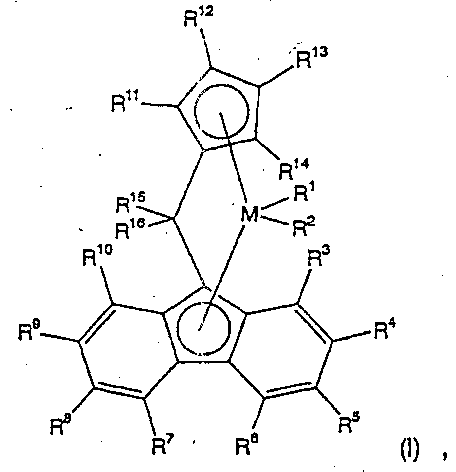 dans laquelle:
M représente un métal du groupe IIIb, IVb, Vb ou VIb de la Classification Périodique des éléments,
R¹ et R², ayant des significations identiques ou différentes, représentent chacun un atome d'hydrogène, un groupe carboné en C1-C40 tel qu'un groupe alkyle en C1-C10, alcoxy en C1-C10, aryle en C6-C10, aryloxy en C6-C25, alcényle en C2-C10, arylalkyle en C7-C40 ou arylalcényle en C7-C40, un groupe OH, un atome d'halogène ou un groupe NR¹⁵₂ dans lequel R¹⁵ représente un atome d'halogène, un groupe alkyle en C1-C10 ou un groupe aryle en C6-C10, ou bien R¹ et R² forment ensemble et avec les atomes qui les relient un système cyclique,
R³, R⁴, R⁵, R⁶, R⁷, R⁸, R⁹, R¹⁰, R¹¹ et R¹⁴, ayant des significations identiques ou différentes, représentent chacun un atome d'hydrogène, un groupe carboné en C1-C40 tel qu'un groupe alkyle en C1-C10 qui peut être halogéné, un groupe aryle en C6-C30 qui peut être halogéné, un groupe aryloxy en C6-C20, alcényle en C2-C12, arylalkyle en C7-C40, alkylaryle en C7-C40 ou arylalcényle en C8-C40, un atome d'halogène, un groupe SiR¹⁷₃, -NR¹⁷₂, -SiOR¹⁷₃; -SiSR¹⁷₃ ou -PR¹⁷₂ dans lequel les symboles R¹⁷, ayant des significations identiques ou différentes, représentent chacun un atome d'halogène, un groupe alkyle en C1-C10 ou aryle en C6-C10, ou bien forment ensemble un système cyclique,
R¹⁵ et R¹⁶, ayant des significations identiques ou différentes, représentent chacun un atome d'hydrogène, un groupe alkyle en C1-C10 qui peut être halogéné, un groupe aryloxy en C6-C20, alcényle en C2-C12, arylalkyle en C7-C40 ou arylalcényle en C8-C40, un atome d'halogène, un groupe SiR¹⁷₃, -NR¹⁷₂, -SiOR¹⁷₃, -SiSR¹⁷₃ ou -PR¹⁷₂ dans lequel les symboles R¹⁷, ayant des significations identiques ou différentes, représentent chacun un atome d'halogène, un groupe alkyle en C1-C10 ou aryle en C6-C10 ou forment ensemble un système cyclique,
ou bien deux groupes voisins ou plus parmi les groupes R³, R⁴, R⁵, R⁶, R⁷, R⁸, R⁹, R¹⁰, R¹¹, R¹⁴, R¹⁵, et R¹⁶ forment ensemble et avec les atomes qui les relient un système cyclique contenant de préférence 4 à 40 et plus spécialement 6 à 20 atomes de carbone,
et R¹² et R¹³, ayant des significations identiques ou différentes, représentent chacun un atome d'hydrogène ou un groupe en C6-C30 contenant un radical aryle, et au moins un des symboles R¹² et R¹³ a une signification autre que l'hydrogène.

2. Métallocène stéréorigide de formule I selon la revendication 1, dans laquelle:
M représente un métal du groupe IVb de la Classification Périodique des éléments, par exemple le titane, le zirconium ou le hafnium, plus spécialement le zirconium,
R¹ et R² ont des significations identiques et représentent chacun un groupe alkyle en C1-C4 ou un atome d'halogène, par exemple de fluor, de chlore, de brome ou d'iode, plus spécialement de chlore,
R³, R⁴, R⁵, R⁶, R⁷, R⁸, R⁹, R¹⁰, R¹¹ et R¹⁴, ayant des significations identiques ou différentes, représentent chacun un atome d'hydrogène, un groupe alkyle en C1-C10 ou aryle en C6-C24,
R¹⁵ et R¹⁶, ayant des significations identiques ou différentes, représentent chacun un atome d'hydrogène ou un groupe alkyle en C1-C10,
ou bien deux groupes voisins ou plus parmi les groupes R³, R⁴, R⁵, R⁶, R⁷, R⁸, R⁹, R¹⁰, R¹¹, R¹⁴, R¹⁵ et R¹⁶ forment ensemble et avec les atomes qui les relient un système cyclique aromatique ou aliphatique contenant 4 à 20 atomes de carbone, et R¹² et R¹³, ayant des significations identiques ou différentes, représentent chacun un atome d'hydrogène ou un groupe aryle en C6-C24.

3. Métallocène stéréorigide de formule I selon la revendication 1, dans laquelle:
M représente le zirconium,
R¹ et R² sont identiques et représentent chacun un atome d'halogène, plus spécialement de chlore,
R³, R⁴, R⁵, R⁶, R⁷, R⁸, R⁹, R¹⁰, R¹¹ et R¹⁴, ayant des significations identiques ou différentes, représentent chacun un atome d'hydrogène, un groupe alkyle en C1-C4 tel que méthyle, éthyle, propyle, isopropyle, butyle, tert-butyle ou isobutyle, ou un groupe aryle en C6-C14 tel que phényle ou naphtyle,
R¹⁵ et R¹⁶, ayant des significations identiques ou différentes, représentent chacun un atome d'hydrogène ou un groupe alkyle en C1-C4 tel que méthyle, éthyle, propyle, isopropyle, butyle, tert-butyle ou isobutyle, ou bien R¹⁴ et R¹⁵ forment ensemble un système cyclique.

4. Catalyseur contenant a) au moins un métallocène stéréorigide de formule I selon une ou plusieurs des revendications 1 à 3 et b) au moins un catalyseur auxiliaire.

5. Catalyseur selon la revendication 4, pour lequel le catalyseur auxiliaire est un aluminoxane.

6. Catalyseur selon la revendication 4 ou 5, contenant en outre un support.

7. Catalyseur obtenu en combinant a) au moins un métallocène stéréorigide de formule I selon une ou plusieurs des revendications 1 à 3 et b) au moins un catalyseur auxiliaire.

8. Catalyseur selon la revendication 7, contenant en outre un support.

9. Procédé pour la préparation d'une polyoléfine par polymérisation d'au moins une oléfine en présence d'un catalyseur selon une ou plusieurs des revendications 4 à 8.

10. Procédé selon la revendication 9, selon lequel on polymérise une ou plusieurs oléfines de formule R^{a}-CH=CH-R^{b} dans laquelle R^{a} et R^{b}, ayant des significations identiques ou différentes, représentent chacun un atome d'hydrogène ou un radical hydrocarboné en C1-C20, ou bien R^{a} et R^{b} forment ensemble et avec les atomes qui les relient un ou plusieurs cycles.

11. Utilisation d'un métallocène stéréorigide selon une ou plusieurs des revendications 1 à 3 pour la polymérisation d'oléfines.
